Europäisches Patentamt

European Patent Office

Office européen des brevets

(19)

(11) Veröffentlichungsnummer: **0 127 690**
**A1**

## (12) EUROPÄISCHE PATENTANMELDUNG

(21) Anmeldenummer: **83105424.2**

(51) Int. Cl.³: **B 60 R 21/10**

(22) Anmeldetag: **01.06.83**

(43) Veröffentlichungstag der Anmeldung:
**12.12.84  Patentblatt  84/50**

(84) Benannte Vertragsstaaten:
**DE FR GB IT SE**

(71) Anmelder: **Klippan G.m.b.H Sicherheitsgeräte**
**Kohfurth 15 Postfach 1280**
**D-2000 Hamburg 3/Norderstedt(DE)**

(72) Erfinder: **Weman, Per Olof**
**Hertogstraat 143**
**B-3030 Heverlee/Leuven(BE)**

(74) Vertreter: **Weber, Dieter, Dr. et al,**
**Dr. Dieter Weber und Klaus Seiffert Patentanwälte**
**Gustav-Freytag-Strasse 25**
**D-6200 Wiesbaden 1(DE)**

(54) **Halterung für einen Durchlaufbeschlag mit Einstell- und Drehmöglichkeit.**

(57) Die Halterung weist Befestigungseinrichtungen (4) auf für die Anbringung an einem Stützteil (1), z.B. einem Türholm, und weist ein Umlenkstück (32) auf, um welches das Band (52) herumgeführt ist. Es ist vorgesehen, daß am Stützteil (1) eine Zahnstange (2) angebracht ist, daß ein Verbindungsteil (5) der Halterung (3) längs der Zahnstange (2) verschiebbar ist und mit dieser in Rasteingriff bringbar ist und daß das Umlenkstück (32) an dem Verbindungsteil (5) angeordnet ist. Zweckmäßig ist es hierbei, wenn das Verbindungsteil (5) unter Bildung eines etwa U-förmigen Querschnittes zwei die Zahnstange (2) umfassende Flansche (33) aufweist.

Fig. 1

Die Erfindung betrifft eine Halterung für einen Durchlaufbeschlag zum Halten und Führen von Bändern, insbesondere eines Sicherheitsgurtes in einem Kraftfahrzeug, mit Befestigungseinrichtungen für die Anbringung an einem Stützteil, z.B. einem Türholm , und mit einem Umlenkstück, um welches das Band herumgeführt ist.

Die Erfindung wird im folgenden anhand eines Durchlaufbeschlages für einen Sicherheitsgurt für Kraftfahrzeuge beschrieben, es versteht sich aber, daß die Halterung nicht auf diese spezielle Anwendungsform beschränkt ist.

Es sind die verschiedensten Durchlaufbeschläge bekannt, bei welchen das Umlenkstück gerade oder gebogen sein kann, wobei die Halterung des Durchlaufbeschlages in der Regel schwierig zu montieren ist.

Für den Schutz des den Sicherheitsgurt tragenden Insassen ist die Höhe der Anbringung des Durchlaufbeschlages am Fahrzeug, z.B. an dessen Türholm, sehr wichtig. Wenn der Durchlaufbeschlag zu hoch am Türholm angebracht ist, ruht der obere Teil des Gurtbandes beim Unfall auf der Brust des Insassen. Ist andererseits hingegen der Durchlaufbeschlag in zu geringer Höhe, d.h. in zu geringem Abstand vom Boden des Fahrzeuges, angebracht, dann kann sich der Körper des Insassen im Unfallmoment aus dem Gurt herausdrehen, so daß eine anormal große Vorwärtsverschiebung des Kopfes und der Schultern des Insassen erfolgt und eine Berührung mit dem Steuerrad oder dem Amaturenbrett mit Nachteil nicht auszuschließen ist.

Die Kraftfahrzeughersteller sehen im Türholm zwar bei einigen Fahrzeugmodellen mehrere Gewindelöcher vor, vorzugsweise drei in einem verhältnismäßig engen Bereich unterein-

ander angeordnete Löcher, in welche der Durchlaufbeschlag mittels einer Schraube fest montiert werden kann. Einerseits ist mit Nachteil diese Befestigungsmöglichkeit in der Höhe nicht in alle Lagen verschiebbar und einstellbar, und andererseits ist die Montage umständlich, so daß nicht jeder Fahrzeugbesitzer den Durchlaufbeschlag selbst in die richtige Höhe einstellen kann.

Aufgabe der Erfindung ist daher die Verbesserung der Halterung der eingangs genannten Art dahingehend, daß eine schnelle Montage und gute Einstellmöglichkeit in der Höhe unter Anpassung an die anatomischen Abmessungen des jeweiligen Insassen möglich sind.

Diese Aufgabe wird erfindungsgemäß dadurch gelöst, daß am Stützteil eine Zahnstange angebracht ist, daß ein Verbindungsteil der Halterung längs der Zahnstange verschiebbar ist und mit dieser in Rasteingriff bringbar ist und daß das Umlenkstück an dem Verbindungsteil angeordnet ist. Das Stützteil ist vorzugsweise der Türholm oder das betreffende Fahrzeugteil, an welchem der Durchlaufbeschlag befestigt werden soll. Da die Erfindung anhand eines Gurtbandsystems hier zum Verständnis des Lesers im einzelnen erläutert wird, kann angenommen werden, daß das Stützteil als etwa vertikal verlaufender Türholm ausgebildet ist, wobei die Zahnstange parallel und im Abstand zu diesem angebracht ist. Das Verbindungsteil der gesamten Halterung verbindet also über die Zahnstange den Türholm mit dem Umlenkstück, welches letztlich das Gurtband trägt. Die wesentlichen Teile sind also die Zahnstange und das Verbindungsteil, die in Rasteingriff miteinander bringbar sind.

Dabei ist es besonders bevorzugt, wenn erfindungsgemäß das Verbindungsteil unter Bildung eines etwa U-förmigen Querschnittes zwei die Zahnstange umfassende Flansche aufweist. Derartige Teile kann man aus Blechen stanzen, folglich auf sehr wirtschaftliche Weise herstellen, und dennoch haben diese Teile hinreichende Festigkeit. Die Flansche umgreifen die Zahnstange, sind längs dieser verschiebbar und können je nach der gewünschten Höhe mit dem betreffenden Zahn der Zahnstange in Rasteingriff gebracht werden. Dadurch ist ersichtlich das Einjustieren der Anbringhöhe für den Durchlaufbeschlag am Türholm eine rasch zu bewerkstelligende Tätigkeit, die auch derart einfach ist, daß jeder Fahrzeugbenutzer die Halterung auf die für ihn individuell geltenden Maße und damit die Höhe am Türholm einstellen kann.

Vorteilhaft ist es gemäß der Erfindung ferner, wenn das Verbindungsteil durch eine Feder mit der Zahnstange in Rasteingriff vorgespannt ist. Hierdurch wird die Montage noch weiter erleichtert, denn die Vorspannung sorgt dafür, daß in der gerade eingestellten Höhe das Verbindungsteil und damit das Umlenkstück fest an der Zahnstange verankert wird. Wenn dann später, beispielsweise beim Verkauf und Besitzerwechsel des Fahrzeuges, die Halterung auf eine andere Höhe am Türholm einzustellen ist, braucht der Insasse oder Fahrzeugbesitzer zum Verstellen lediglich den Druck der Feder zu überwinden und kann dann das Verbindungsteil auf der Zahnstange auf die entsprechende Höhe nach oben oder unten verstellen.

Bei vorteilhafter weiterer Ausgestaltung der Erfindung hat die Zahnstange runden Querschnitt, jeder Zahn erstreckt im Querschnitt nur um etwa den halben Umfang, und in den im Abstand voneinander angeordneten Flanschen sind runde Löcher etwa gleichen Durchmessers wie die Zähne vorgesehen. Hierdurch wird die Zahnstange trotz einfacher Maßnahmen recht genau geführt und gehaltert; ihre Herstellung ist sehr wirtschaftlich, und das gleiche gilt für das Verbindungsteil mit den beiden im Abstand voneinander angeordneten Flanschen, deren Löcher die Zahnstange aufnehmen. Außerdem erlaubt diese Ausführungsform ein Drehen der Flansche im Verhältnis zur Zahnstange. Dieses Drehen kann nützlich sein für den Komfort des Gurtbandsystems, weil nämlich immer dann, wenn die Führungsoberfläche bzw. das Umlenkstück mit seiner Führungso-

...berfläche senkrecht zur Gurtführungsrichtung liegt, die kleinstmögliche Reibung gegeben ist. Dies kann in Verbindung mit einer sehr glatten Oberfläche, z.B. Chromplattierung oder Kunststoffbeschichtung, noch weiter verbessert werden. Durch die Schwenkmöglichkeit des Verbindungsteils und damit der gesamten Halterung kann der Durchlaufbeschlag also immer in die für die minimale Reibung günstige Position gebracht werden, bei welcher die Führungsoberfläche senkrecht zur Gurtrichtung liegt.

Vorteilhaft ist es ferner, wenn erfindungsgemäß Mittel für die Drehbegrenzung des Durchlaufbeschlages um einen Winkel von $5^o$ bis $20^o$, vorzugsweise $10^o$ bis $15^o$, vorgesehen sind. Als Mittel kann man nach einer besonders günstigen Ausführungsform der Erfindung einen Spalt vorsehen zwischen dem dem Stützteil zugewandten Ende des Verbindungsteiles und dem Stützteil selbst. Es sind aber auch andere Mittel vorstellbar, beispielsweise die Anpassung eines vieleckigen oder ovalen Querschnittes der Zahnstange einerseits und der entsprechenden Kontur des Loches in den Flanschen des Verbindungsteiles andererseits. Bei einer weiteren Ausführungsform ist es möglich, bei mehrteiliger Ausführung der Halterung, z.B. ein Einhängteil mit gewisser Toleranz oder Spiel in Haken derart einzuhängen, daß auch hierdurch eine Drehbewegung möglich wird. Es versteht sich bei all diesen Ausführungsformen, daß die Drehung um eine vertikale Achse erfolgt, bzw. um eine parallel zum Türholm verlaufende Achse, zu welcher auch die Zahnstange parallel ist.

Zweckmäßig ist es gemäß der Erfindung ferner, wenn das Verbindungsteil mindestens einen etwa quer zur Zahnstange herausstehenden Haken mit Ausnehmungen und ein hiermit verbindbares Einhängteil aufweist. Der Ausbau gemäß der Erfindung ist für die Montage und Herstellung einfach und praktisch, aus optischen Gründen wünscht der Fahrzeughersteller aber häufig eine Verkleidung, wobei im Bereich des Türholmes vorzugsweise eine Verkleidungswand aus Kunststoff oder Leder vorgesehen wird. Die Zahnstange und zumindest die die-

se umgreifenden Flansche des Verbindungsteiles, gegebenenfalls aber auch das Verbindungsteil selbst, sollen für den Insassen oder Fahrer eingekapselt sein. Hierbei ist es dann vorteilhaft, wenn das Verbindungsteil mit den vorstehend beschriebenen Haken versehen ist, so daß z.B. die Anordnung der gesamten Halterung so vorgesehen sein kann, daß nur die Haken aus einem Schlitz in der Verkleidungswand herausstehen. Diese stellen dann die Halterung für den Durchlaufbeschlag dar, der letztlich auf diese Haken aufgesetzt und dort verriegelt wird.

Die Haken können zwar einstückig mit dem Verbindungsteil ausgebildet werden oder an dieses angeschweißt werden, denkbar ist aber auch eine zweiteilige Ausführung des Verbindungsteiles, bei welchem eine mit den Haken versehene Platte in das Verbindungsteil, welches entsprechende Löcher oder Schlitze aufweist, eingelegt wird, so daß die Haken durch die Schlitze hindurchragen. Die Verankerung einer mit solchen Haken versehenen Verstärkungsplatte am Verbindungsteil erfolgt beispielsweise durch Punktschweißen.

Bei einer anderen bevorzugten Ausführungsform trägt das Einhängteil das Umlenkstück. Z.B. kann das Umlenkstück in Form eines im Querschnitt flachen oder runden Stabes am Einhängteil angebracht sein, und der Benutzer braucht dann nur das Verbindungsteil mit den für ihn sichtbaren Haken längs der Zahnstange in die richtige Höhe einzustellen und danach das Einhängteil aufzusetzen.

Günstig ist es dabei, wenn erfindungsgemäß ferner eine Abdeckkappe mit dem Einhängteil in Verriegelungseingriff bringbar ist. Häufig wünscht der Benutzer bei den häufig kräftig ausgebildeten Einzelteilen eines Durchlaufbeschlags und seiner Halterung eine äußerlich ansprechende Verkleidung, wobei Kunststoffkappen und dergleichen Verwendung finden. Die Verriegelung zwischen dem Einhängteil und dem Haken gelingt mit den vorstehenden Maßnahmen besonders vorteilhaft, wenn man die Abdeckkappe zugleich als Verriegelungsmittel verwendet. Z.B. können geeignete Vorsprünge und Einschnappnasen an der Abdeckkappe angeformt sein, die mit den Haken und dem Einhängteil so in Eingriff treten, daß eine gegenseitige Verriegelung erfolgt.

Ohne Werkzeuge ist der Benutzer des Fahrzeugs in der Lage, den Durchlaufbeschlag durch die neue Halterung schnell und passend einzustellen. Die Querschnittsgestaltung der Zahnstange kann unterschiedlich sein, vorzugsweise wurde der runde Querschnitt angegeben. Denkbar ist aber auch ein U-Profil oder Schienenprofil, sei es T- oder Ⅰ-Profil. Entsprechend werden dann die Löcher in der Flanschen des Verbindungsteils auszugestalten sein.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:

Figur 1 schematisch im Schnitt eine erste Ausführungsform einer Halterung, bei welchem das Verbindungsteil als ein einziges Stück mit angebrachtem Umlenkstück ausgebildet ist, entsprechend der Linie I-I der Figur 2,

Figur 2 eine Draufsicht auf das Verbindungsstück, wenn man in Figur 1 von links nach rechts blickt,

Figur 3 eine Querschnittsansicht durch die Zahnstange entlang der Linie III-III der Figur 1,

Figur 4 eine ähnliche Ansicht wie Figur 1, wobei jedoch eine andere Ausführungsform mit einer Verstärkungsplatte mit Haken gezeigt ist, die aus einer Verkleidungswand herausstehen,

Figur 5 die Draufsicht auf das Mittelstück des Verbindungsteiles,

Figur 6 die Verstärkungsplatte mit den aus ihrer Hauptebene herausstehenden Haken, unten in der Draufsicht auf die Platte und oben in der Seitenansicht,

Figur 7 schematisch eine weitere andere Ausführungsform einer Halterung, wobei wiederum eine Verstärkungsplatte mit Haken am Verbindungsteil befestigt ist, wobei jedoch hier ein Einhängteil mit Abdeckkappe vorgesehen ist,

Figur 8a eine Draufsicht auf das Einhängteil, wenn man in Figur 7 an der Stelle der Verkleidungswand von links nach rechts blickt,

Figur 8b die Ansicht entlang der Linie A-A der Figur 8a,

Figur 9 eine Querschnittsansicht eines in

Figur 10 gezeigten besonders ausgestalteten Türholmes,

Figur 11 die Seitenansicht einer Hakenstützplatte und

Figur 12 den oberen Teil derselben in perspektivischer Darstellung.

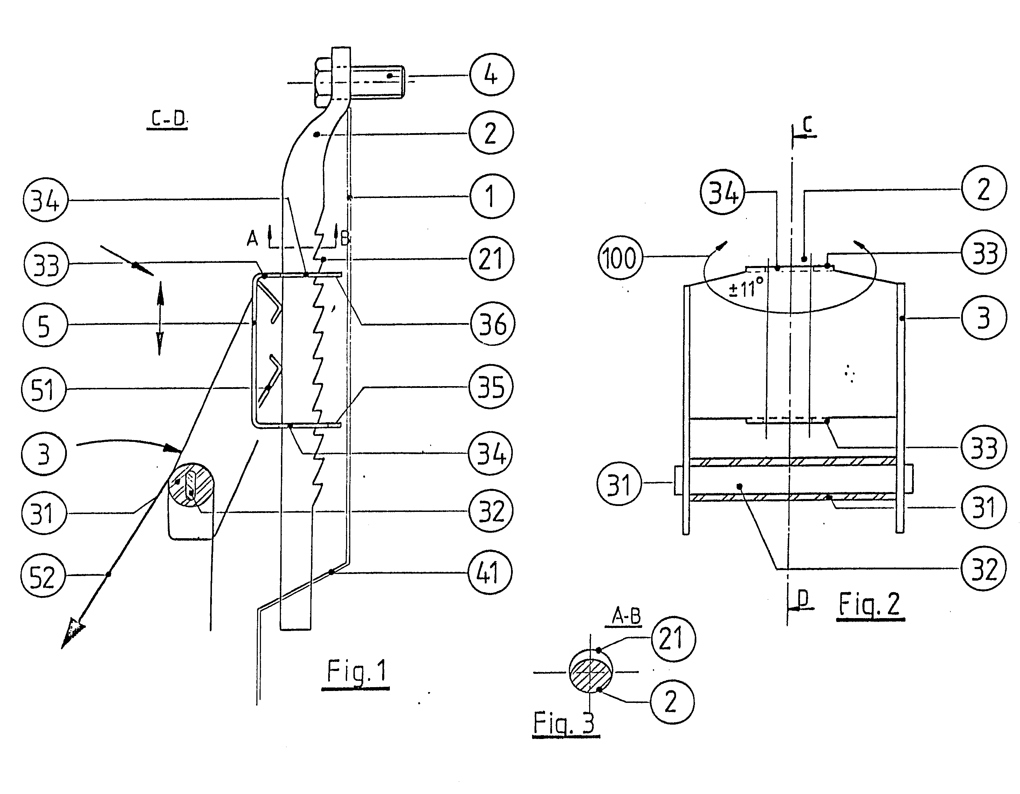

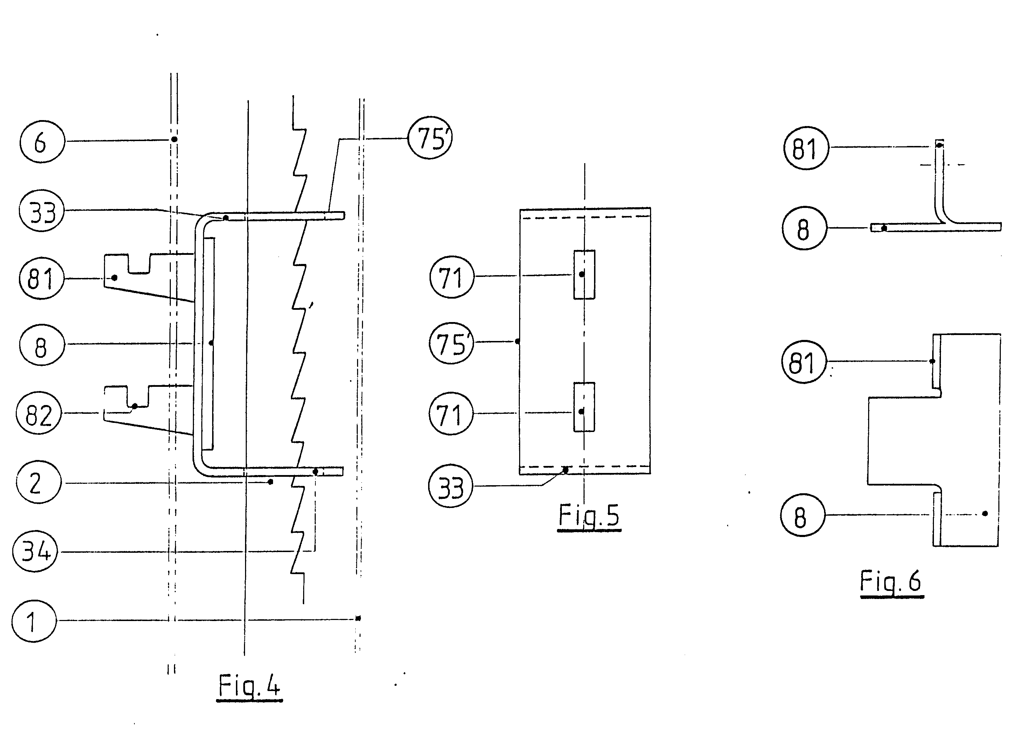

Am Türholm 1 ist bei der Ausführungsform nach den Figuren 1 bis 3 eine Zahnstange 2 mittels einer Schraube 4 befestigt und ragt in vertikaler Richtung parallel zum Türholm 1 nach unten durch ein Loch 41. Entsprechend der Darstellung der Figur 3 ist der Querschnitt der Zahnstange 2 kreisförmig, wobei die einzelnen Zähne 21 sich im Querschnitt nur etwa über den halben Umfang erstrecken. Mit nur wenig größerem Durchmesser als der der Zahnstange 2 sind kreisrunde Löcher 34 in Flanschen 33 eines Verbindungsteils 5 ausgebildet, so daß das Verbindungsteil 5 bzw. seine Flansche 33 gemäß Darstellung in Figur 1 die Zahnstange 2 umfassen. Durch die Druckfeder 51 ist das Verbindungsteil 5 gegenüber der Zahnstange 2 so vorgespannt, daß die Zähne 21 mit den entsprechenden Kanten der Löcher 34 in den Flanschen 33 in Rasteingriff sind. Man erkennt auch das Ende 35 der Flansche 33 gegenüber dem Türholm 1, so daß sich durch den Abstand zwischen diesen Enden 35 und der Vorderfläche des Türholmes 1 ein Spalt 36 von nur 1 bis 5, vorzugsweise etwa 3 mm Größe ergibt. Hierdurch ist die gemäß Kreisdoppelpfeil 100 mögliche Drehbewegung auf vorzugsweise 11° begrenzt.

An dem Verbindungsteil 5 sind zwei Seitenbleche angebracht, die das Umlenkstück 32 mit einer Kunststoffbelegung 31 tragen. Das Gurtband 52 ist über dieses Umlenkstück gelegt und

geführt. Die gesamte Halterung ist mit 3 bezeichnet.

Bei der Ausführungsform nach den Figuren 4 bis 6 ist eine Verkleidungswand 6 vorgesehen, die einen hier nicht gezeigten Längsschlitz hat, durch welchen die Haken 81 etwa quer zur Längsrichtung der Zahnstange 2 in den Wageninnenraum herausstehen. Dieser nicht gezeigte Längsschlitz in der Verkleidung 6, die aus Kunststoff oder Leder bestehen kann, braucht nur etwa 1 mm breiter als die Breite des jeweiligen Hakens 81 zu sein. Denkbar wäre im übrigen die Anbringung einer Verkleidungswand 6 auch im Zusammenhang mit der Ausführungsform der Figur 1, wobei dann allerdings ein sehr breiter Schlitz vorgesehen sein müßte, nämlich ein wenig breiter als die gesamte Halterung 3 mit Umlenkstück 32. Eine entsprechende Abdeckkappe könnte bei der Ausführungsform der Figuren 1 bis 3 so lang ausgestaltet werden und auf die Halterung 3 gesetzt werden, daß man den großen breiten Schlitz in der Verkleidung nicht sieht und der Gesamtaufbau ein ansehnliches Äußeres hat.

Besonders günstig und einfach ist die komfortable Ausgestaltung aber in Verbindung mit der Ausführungsform nach den Figuren 4 bis 6, weil hier nur ein schmaler Schlitz in der Wand 6 vorgesehen sein muß. Das Verbindungsteil 5' ist bei der hier gezeigten Ausführungsform zwar auch mit den beiden Flanschen 33 versehen, das Mittelstück, welches man in Draufsicht in Figur 5 sieht, weist aber zwei übereinander angeordnete Schlitze 71 auf. Durch diese werden die Haken 81 mit ihren Ausnehmungen 82 gesteckt. Die Haken 81 gehören zur Verstärkungsplatte 8, die in Figur 6 bei einer ausgestanzten Ausführungsform gezeigt ist. Man erkennt die Herstellung des Verbindungsteils 5', nämlich das Anlegen der Verstärkungsplatte 8 unter Hindurchstecken der Haken 81 durch die Schlitze 71, und dann wird die Platte 8 durch Punktschweißen am Verbindungsteil 5' befestigt, wie aus den Zeichnungen nicht ersichtlich ist.

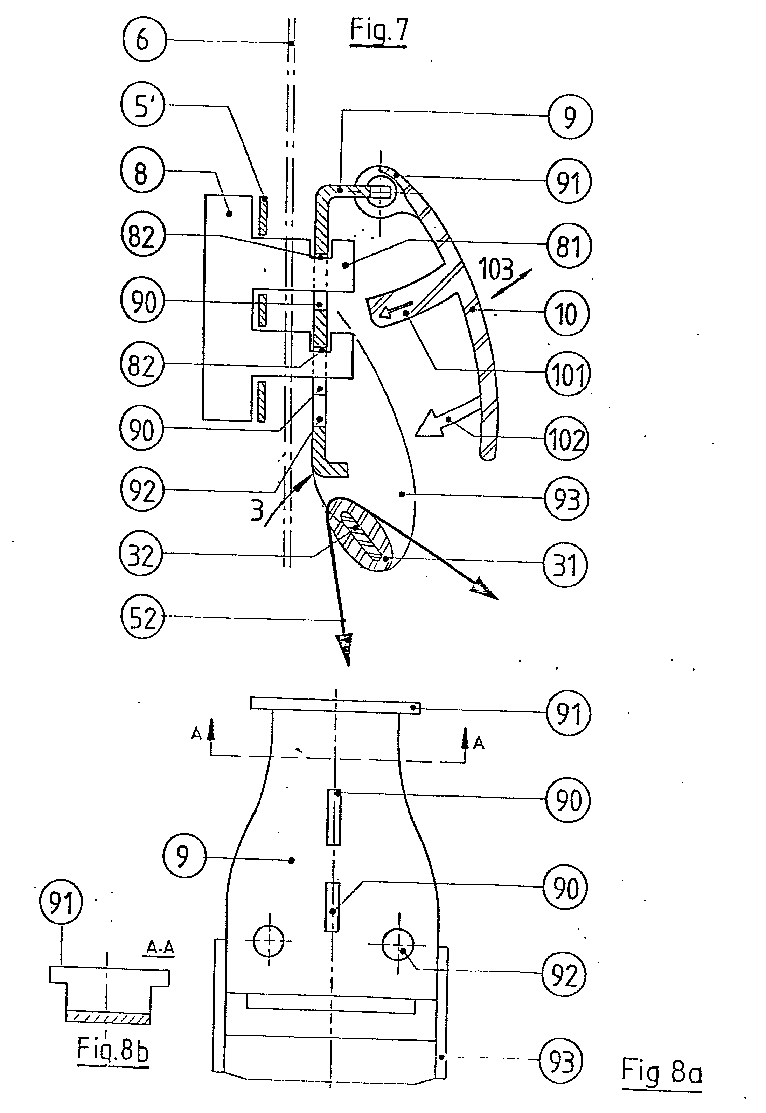

Bei der Ausführungsform nach Figuren 7, 8a und 8b besteht die Halterung 3 aus drei Teilen, nämlich dem Verbindungsstück 5', der Verstärkungsplatte 8 mit den Haken 81 und dem Einhängteil 9. Die schematische Schnittdarstellung der Figur 7 ist zwar im Aufbau gleich der der Figur 4, jedoch sind die Seiten vertauscht, denn bei Figur 4 ist der Insasse links zu denken, weshalb das Verbindungsteil 5' zwischen der Verkleidungswand 6 und im Türholm 1 angeordnet ist. Bei Figur 7 hingegen sind die Zahnstange und der Türholm überhaupt nicht dargestellt, und das Verbindungsteil 5' ist auch nur schematisch angedeutet, denn diese Teile sind gleich. Im Unterschied zum Aufbau nach Figur 4 hat der gemäß Figur 7 ein besonders ausgestaltetes Einhängteil 9, welches - vom Insassen des Fahrzeuges aus gesehen - vor der Verkleidungswand 6 in die Ausnehmungen 82 der Haken 81 eingehängt wird. Die Verkleidungswand 6 ist deshalb nur gestrichelt gezeigt, weil sie nicht ein für die technische Konstruktion notwendiges Bestandteil ist. Das Einhängteil 9 weist etwa in der Mitte seiner Hauptebene zwei Schlitze 90 auf, mit deren Hilfe das vorstehend beschriebene Einhängen des Einhängteils 9 auf die Haken 81 erfolgen kann. Das Einhängteil mit dem über Tragbleche 93 angebrachten Umlenkstück 32 mit dem Kunststoffüberzug 31 zum Umlenken des Gurtbandes 52 stellt praktisch den sogenannten Durchlaufbeschlag dar; wenngleich außer dem nur stückweise angedeuteten Verbindungsteil 5' mit Verstärkungsplatte 8 an sich auch das Einhängteil 9 zu der allgemein mit 3 bezeichneten Halterung gehört.

Figur 8a zeigt eine Draufsicht auf das Einhängteil 9 mit den Schlitzen 90, wobei am oberen Ende Drehgelenke 91 ausgestanzt angeformt sind. Diese Form ist auch in der Schnittansicht A-A durch Figur 8a in Figur 8b gezeigt.

Diese beiden stiftartig nach außen ragenden Drehgelenke 91 stellen sozusagen Scharnierstützen dar für die in Figur 7 im Querschnitt gezeigte Abdeckkappe 10, die sich gemäß Pfeil 103 um die durch die Drehgelenke 91 gelegte Achse schwenken läßt. Diese Abdeckkappe 10 stellt eine Sicherung für den formschlüssigen Eingriff des Einhängteils 9 in die Haken 81 dar. Auf der vom Insassen zur Verkleidungswand 6 hin abgewandten Seite der Abdeckkappe 10 ragt etwa im mittleren Bereich ein Vorsprung 101 mit solchen Maßen heraus, daß er voll den Raum zwischen den Haken 81 füllen kann bzw. einnimmt, wenn die Abdeckkappe 10 gemäß dem im Vorsprung 101 gezeigten Pfeil nach unten geklappt ist. Außerdem sind an der Abdeckkappe 10 einige Einschnappnasen angebracht, von denen z.B. eine unten bei 102 angebracht gezeigt ist. Diese greift in ein Loch 92 im Einhängteil 9 ein, während auf der gegenüberliegenden Seite der Symmetrieebene im Einhängteil 9, d.h. auf der durch die Schlitze 90 gebildeten Linie gegenüberliegenden Seite gemäß Darstellung der Figur 8a noch ein solches Loch 92 für die Aufnahme einer weiteren Einschnappnase angeordnet ist, um die Kappe nach dem Herunterklappen ganz festzuhalten. Die Länge der Einschnappnasen 102 ist so ausgebildet, daß diese zusammen mit der Elastizität der Abdeckkappe selbst jegliches horizontales Spiel absorbieren, so daß die Anordnung erschütterungsfrei fest in den Haken sitzt.

Vorteilhaft kann es sein, wenn die Ausnehmungen 82 etwas weiter als die Dicke des Einhängteils 9 ist. Dann ist nämlich die Möglichkeit gegeben, daß das Einhängteil 9 und damit der ganze Durchlaufbeschlag um eine gedachte vertikale Achse etwa um $\pm 15^\circ$ gedreht werden kann, so daß man wiederum die gewünschte Drehbeweglichkeit - allerdings auf den genannten Winkel beschränkt - erhält.

Man erkennt, daß der Aufbau aller vorstehend erwähnten Ausführungsformen sehr einfach ist und die Montage auch von Laien schnell und bequem durchgeführt werden kann.

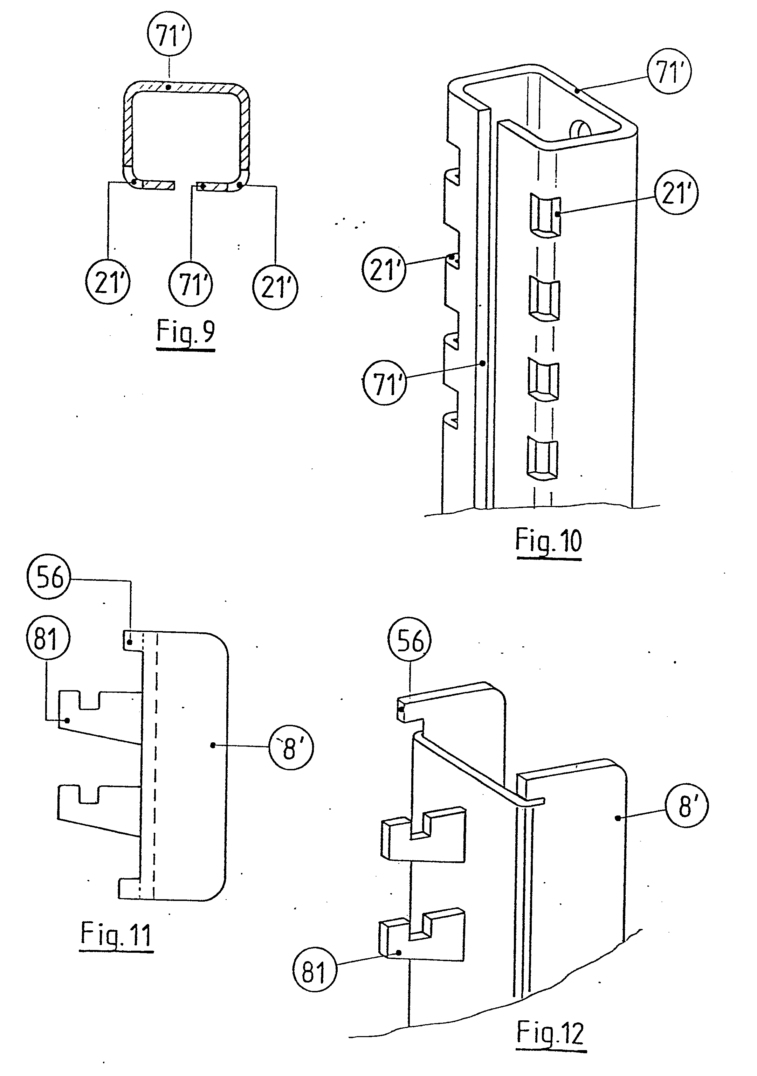

Es ist oben schon gesagt worden, daß die Zahnstange 2 verschiedene Querschnitte haben kann, z.B. auch als U-Profil oder Gardinenstange usw. ausgebildet sein kann. In diesem Falle muß das Verbindungsteil und/oder die Verstärkungsplatte 8' entsprechend ausgestaltet sein. Die Figuren 9 bis 12 zeigen eine solche geänderte Ausführungsform. Z.B. kann der Türholm in Gestalt des in Figur 10 perspektivisch gezeigten Rechteckrohres aufgebaut sein mit einem Längsschlitz 71' und an der Vertikalkante befindlichen Ausnehmungen 21', welche die Funktion von Zähnen übernehmen können. Figur 9 zeigt einen Querschnitt dieses Türholmes 1', in dessen Innerem die im Querschnitt U-förmig ausgebildete Verstärkungsplatte 8' vertikal so verschoben werden kann, daß die stirnseitig herausstehenden Haken 81 im mittigen Längsschlitz 71' verlaufen, bis die gewünschte Höhe erreicht ist. Dann erfolgt ein Einrasten der Vorsprünge 56 in die entsprechenden Ausnehmungen 21'. Nicht gezeigte Federn können für ein Festhalten dieses Rasteingriffes der Verstärkungsplatte 8' im Türholm 1' sorgen.

Patentansprüche
------------------------------

1. Halterung für einen Durchlaufbeschlag zum Halten und Führen von Bändern, insbesondere eines Sicherheitsgurtes in einem Kraftfahrzeug, mit Befestigungseinrichtungen (4) für die Anbringung an einem Stützteil (1), z.B. einem Türholm , und mit einem Umlenkstück (32), um welches das Band (52) herumgeführt ist, d a - d u r c h g e k e n n z e i c h n e t , daß am Stützteil (1) eine Zahnstange (2) angebracht ist, daß ein Verbindungsteil (5) der Halterung (3) längs der Zahnstange (2) verschiebbar ist und mit dieser in Rasteingriff bringbar ist und daß das Umlenkstück (32) an dem Verbindungsteil (5) angeordnet ist.

2. Halterung nach Anspruch 1, dadurch gekennzeichnet, daß das Verbindungsteil (5) unter Bildung eines etwa U-förmigen Querschnittes zwei die Zahnstange (2) umfassende Flansche (33) aufweist.

3. Halterung nach Anspruch 1 oder 2, dadurch gekennzeichnet, daß das Verbindungsteil (5) durch eine Feder (51) mit der Zahnstange (2) in Rasteingriff vorgespannt ist.

4. Halterung nach einem der Ansprüche 1 bis 3, dadurch gekennzeichnet, daß die Zahnstange (2) runden Querschnitt hat, daß sich jeder Zahn (21) im Querschnitt nur um etwa den halben Umfang erstreckt und daß in den im Abstand voneinander angeordneten Flanschen (33) runde Löcher (34) etwa gleichen Durchmessers wie die Zahnstange (2) vorgesehen sind.

5. Halterung nach einem der Ansprüche 1 bis 4, dadurch gekennzeichnet, daß Mittel (35, 36) für die Drehung des Durchlaufbeschlages (3) um einen Winkel von 5$^{o}$ bis 20$^{o}$, vorzugsweise 10$^{o}$ bis 15$^{o}$, vorgesehen sind.

6. Halterung nach Anspruch 5, dadurch gekennzeichnet, daß als Mittel für die Drehung des Durchlaufbeschlages (3) ein Spalt (36) zwischen dem dem Stützteil (1) zugwandten Ende (35) des Verbindungsteiles (5) und dem Stützteil (1) vorgesehen ist.

7. Halterung nach einem der Ansprüche 1 bis 6, dadurch gekennzeichnet, daß das Verbindungsteil (5) mindestens einen etwa quer zur Zahnstange (2) herausstehenden Haken (81) mit Ausnehmung (82) und ein hiermit verbindbares Einhängteil (9) aufweist (Figur 4).

8. Halterung nach einem der Ansprüche 1 bis 7, dadurch gekennzeichnet, daß das Einhängteil das Umlenkstück (52) trägt.

9. Halterung nach einem der Ansprüche 1 bis 8, dadurch gekennzeichnet, daß eine Abdeckkappe (10) mit dem Einhängteil (9) in Verriegelungseingriff bringbar ist.

Fig.2

Fig.3

Fig.1

6

33

81

8

82

2

34

1

Fig.4

75'

71

75'

71

33

Fig.5

81

8

81

8

Fig.6

2/4

0127690

0127690

Fig.7

Fig.8b

A.A

Fig 8a

Fig.9

Fig.10

Fig.11

Fig.12

Europäisches
Patentamt

**EUROPÄISCHER RECHERCHENBERICHT**

**0127690**
Nummer der Anmeldung

EP 83 10 5424

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| A | DE-A-3 007 986 (BAYERISCHE MOTOREN WERKE) <br> * Figur 1 * | 1,3,9 | B 60 R 21/10 |
| A | DE-U-7 601 515 (R.G. SZPERKOWSKI) <br> * Figur * | 1,3 | |
| A | DE-A-2 655 995 (PORSCHE) <br> * Figur 3 * | 1 | |
| A | GB-A-1 599 643 (BRITAX) <br> * Figur 10 * | 1 | |
| | ----- | | |

**RECHERCHIERTE SACHGEBIETE (Int. Cl. ³)**

A 62 B 35/00
B 60 R 21/00

Der vorliegende Recherchenbericht wurde für alle Patentansprüche erstellt.

| Recherchenort | Abschlußdatum der Recherche | Prüfer |
|---|---|---|
| BERLIN | 10-01-1984 | BECKER W D H |